# EUROPEAN PATENT APPLICATION

(11) **EP 2 572 761 A2**
(43) Date of publication of application: **27.03.2013**
(21) Application number: 12184159.7
(22) Date of filing: 13.09.2012
(51) Int. Cl.: A62C 37/50, A62C 13/64, F16K 37/00, G01L 7/16

(54) **An improved dispensing valve for a fire extinguisher**

(30) Priority: 23.09.2011 IT RE20110072
(71) Applicant: Sire S.P.A., 42122 Reggio Emilia (IT)
(72) Inventor: Spagni, Elmo, 42122 Reggio Emilia (IT)
(74) Representative: Corradini, Corrado

(57) **Abstract**

An improved dispensing valve, for a fire extinguisher comprising a tank containing an extinguishing substance under pressure, comprising: an outlet (11) for dispensing the extinguishing substance to outside, a base body (12), sealedly applicable to the mouth (61) of the tank, having an internal conduit (13) which sets the chamber of the tank in communication with the outlet (11), intercept means (20) of the fluid flowing in the internal conduit (13), manual command means (30), applied externally to the base body (12) for controlling the intercept means (20); and also comprises a pressure signalling device 40 applied to the base body 12, comprising: a hollow body (46), a sliding obturator (41), a sliding chamber (42) for the obturator (41), located inside the hollow body (47), having a first end (42a) in communication with the chamber (61) of the tank, the obturator (41) sealedly sliding internally of the sliding chamber (42), reaction means (43) acting on the obturator (41) which oppose a thrust produced by the pressure of the chamber (61), the obturator (41) being mobile between a first position in which it is located when the thrust of the reaction means (43) prevails, and a second position in which it is located when the pressure of the chamber (61) prevails, a signalling element (44) mobile together with the obturator (41), projecting at least in part externally of the hollow body (47) in a position that is visible from outside.

## Description

The present invention relates to an improved dispensing valve, applicable to a fire extinguisher comprising a tank containing an extinguishing substance under pressure.

Conventional dispensing valves comprise:
an outlet for dispensing the extinguishing substance externally,
a base body, sealedly applicable to the tank, having a conduit placing the tank chamber with the outlet, intercept means to control the dispensing of the fluid flowing in the internal conduit,
manual control means, applied externally of the base body, for controlling the intercept means.

The manual control means are usually in the form of an elongate lever having a more or less horizontal direction.

Usually, and in any case whenever security reasons require it, the valve also comprises a maximum pressure safety valve device.

A problem associated with these dispensing valves is providing them with means capable of controlling the pressure in the chamber of the tank, in particular to indicate whether it has fallen to unacceptable values; it is, in fact, primarily a correct pressure that enables an effective and correct delivery of the extinguishing substance.

This control is particularly critical because the extinguishers are normally unused for long times (even many years after purchase) during which even a very small pressure loss (leakage, breakages) can lead the tank to discharge and therefore, consequently, to be no longer suitable for its designated use. Therefore usually periodic inspections are necessarily carried out on fire extinguishers to ensure their efficiency, and, particularly in this case, to make sure there is enough pressure in the tank to ensure proper delivery of the extinguishing substance.

These controls on the pressure cannot be carried out practically by turning on the extinguisher. At present the checks are made by visual inspection of a small pressure gauge, applied to the dispensing valve, which measures the pressure in the chamber of the tank.

The pressure gauge is in any case a generally expensive instrument, so to maintain acceptable cost levels, in practice only small and rudimentary pressure gauges are used, that are able to withstand relatively low pressures (around 15-25 bars), and these, in addition to being not very reliable, are not applicable in cases where the pressure is greater than the above-mentioned values.

Fire extinguishers that use CO₂ based extinguishing substance, as well as others, which however still require a higher operating pressure, are not fitted with any indicator of the pressure inside the tank.

An aim of the invention is therefore to disclose an improved dispensing valve for a fire extinguisher, comprising a tank containing an extinguishing substance under pressure, which dispensing valve is able to effectively control the pressure by means of a pressure indicator that:
can operate not only at relatively low or medium pressures (up to 15-25 bar) but which can also operate at higher and very high pressures (above 150 bar);
and which is also able to guarantee reliable control over time;
and which lastly has manufacturing costs that are relatively low.

The above and other aims are attained by the present invention, as it is characterised in the appended claims.

The invention will be disclosed in detail in the following with the help of the accompanying figures of the drawings, which illustrate an embodiment thereof, by way of non-exclusive example.
Figure 1 is a view of the dispensing valve of the invention in its entirety, sectioned along plane 1-1 of figure 2, applied to the mouth of a tank containing extinguishing substance under pressure.
Figure 2 is a view of the valve, partially sectioned according to plane II-II of figure 1.
Figure 3 is an enlarged detail of figure 2, in which the obturator is in the second position (i.e. when the pressure in the tank is correct).
Figure 3A is the same as figure 3, where the obturator is in the first position (i.e. when the pressure in the tank is too low).
Figure 4 is an exploded view of figure 3.
Figure 5 is an enlarged detail of figure 3.

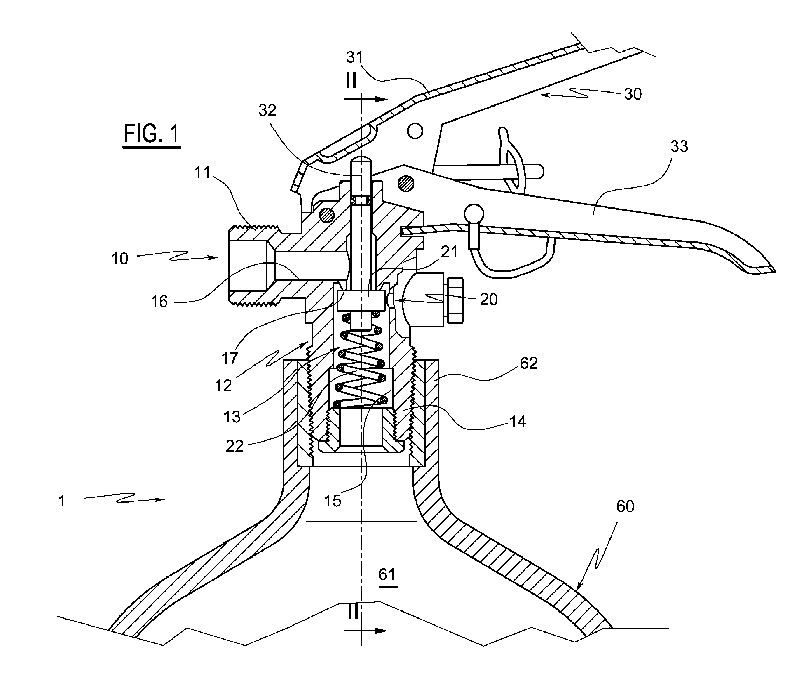

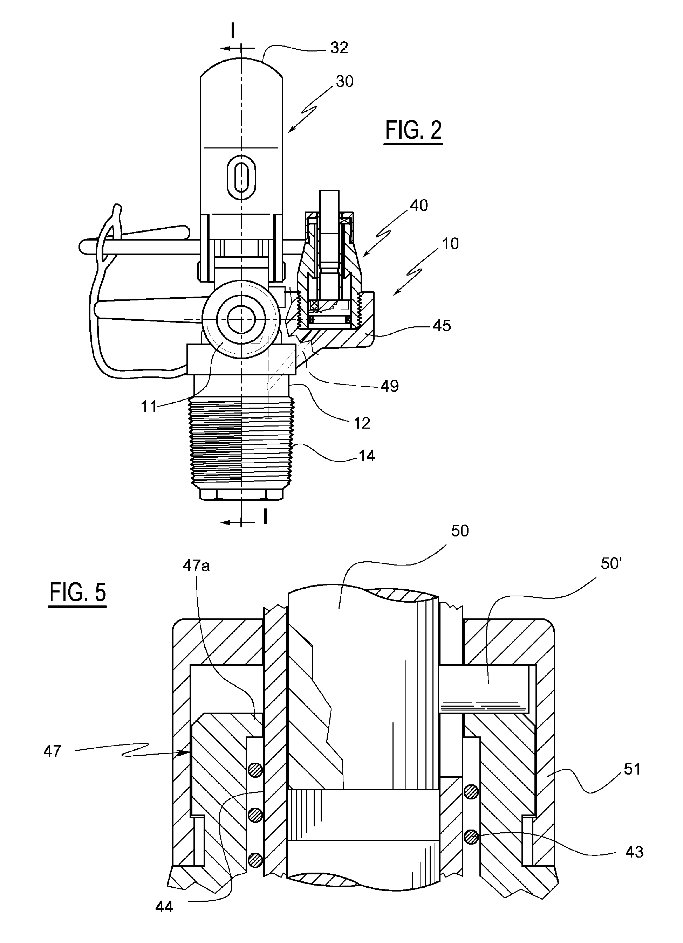

Figure 1 shows an upper part of a fire extinguisher, denoted in its entirety by 1, comprising a tank 60, an internal chamber 61 of which contains an extinguishing substance under pressure, and figures 1 and 2 illustrate an improved dispensing valve 62 of the tank 60, applied to the mouth 62 of the tank 60.

The dispensing valve 10 comprises:
an outlet 11 for dispensing of the substance to the outside;
a base body 12 sealingly applicable to the mouth 62 of the tank 60, having an internal conduit 13 which sets the chamber 61 of the tank in communication with the outlet 11,
intercept means 20 of the fluid flowing in the internal conduit 13,
manual command means 30, applied externally of the base body, for controlling the intercept means 20.

In the illustrated embodiment, provided by way of example in figure 1, the base body 12 is stably associated to the tank 60, with a lower portion 14 thereof inserted by screw-coupling in the mouth 62.

The internal conduit sleeve 13 comprises a vertical channel 15, which axially crosses the lower portion 14 which is superiorly blind and inferiorly open on the chamber 61.

In the upper part thereof, the channel 15 communicates with the internal end of a transversal crossing 16, an internal end of which opens to the outside at the outlet 11.

The pressurised substance present in the chamber 61 can be dispensed to the outside from the outlet 11 though the two channels 15 and 16. Communication through the conduit 13, in particular between the two channels 15 and 16, is opened or closed using the intercept means 20.

In the illustrated embodiment, provided by way of example in figure 1, the means 20 comprise an obturator 21 which is destined to close, under the pressure of a pre-loaded spring 22, a passage seating 17 fashioned in the body 12, at the upper end of the channel 15, thus closing the communication between the two channels 15 and 16.

Using the command means 30, the position of the obturator 21 can be controlled and thus the opening and the closing of the seating 17 can be commanded.

In the illustrated embodiment by way of an example in figure 1, the command means 30 comprise an oscillating lever 31 which can move an axial member 32 acting on the obturator 21, in particular solidly constrained thereto. By oscillating the lever 31 downwards, the member 32 is pushed downwards, which distances the obturator 21 from the seating 17 and thus opens the communication between the chamber 61 and the outlet 11, via the conduit 13, thus producing the exit of the pressurised extinguishing substance in outlet from the outlet 11 of the extinguisher.

By removing the pressure on the lever 31, the spring 22 returns the obturator into the closed position and the chamber 61 is closed.

The closed position is the normal position of the dispensing valve.

The means 30 also comprise a fixed grip 33, solidly fastened to the base body 12, for manipulation of the extinguisher.

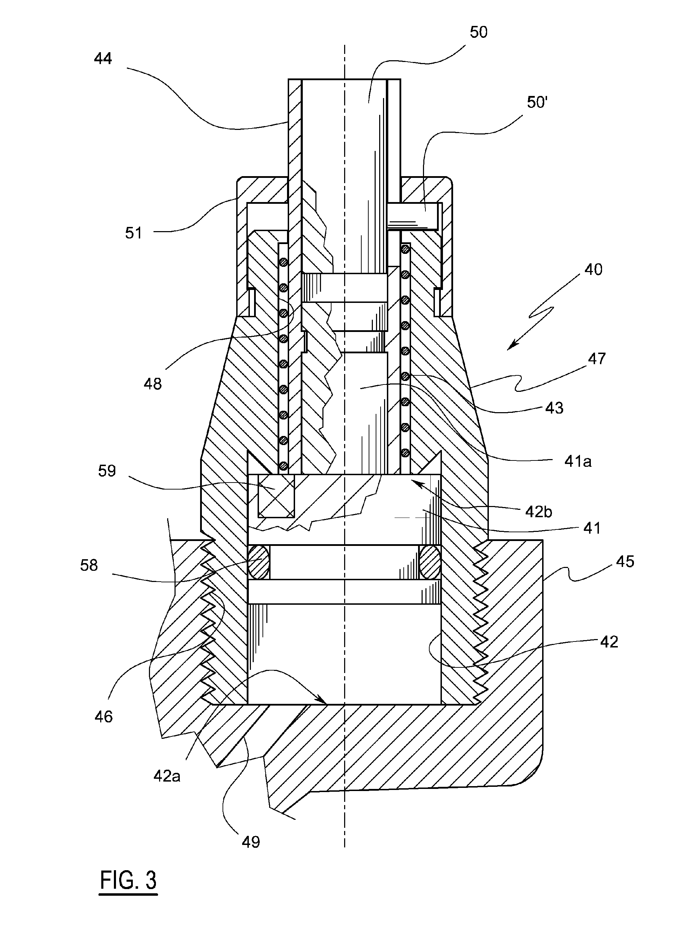

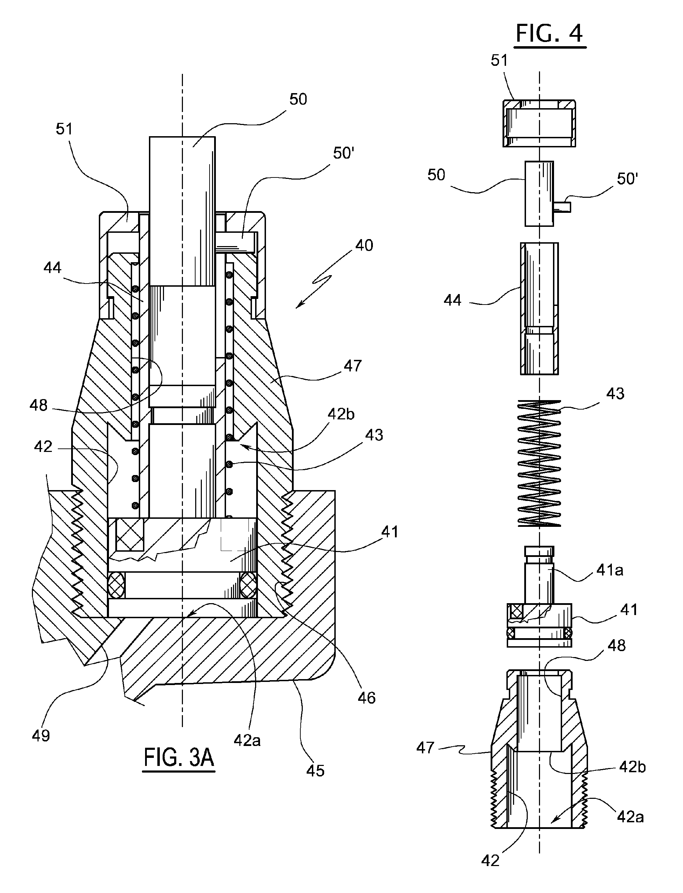

The valve 10 comprises pressure indicator means 40 applied to the base body 12 (shown in particular in figure 3), comprising:
a hollow body 47,
a sliding obturator 41,
a sliding chamber 42 for the obturator 41, located in the hollow body 47, having a first end 42a in communication with the chamber 61 of the tank and a second end 42b in communication with the outside, the obturator 41 being sealedly slidable internally of the chamber 42,
reaction means, in particular a pre-compressed elastic spring 43, acting on the obturator 41, which opposes the thrust produced by the pressure of the chamber 61,
the obturator 41 is mobile between a first position which it is in when the thrust of the reaction means 43 prevails, and a second position which it is in when the pressure of the chamber 61 prevails,
a signalling indicator 44 mobile with the obturator 41, projecting at least partly externally of the hollow body 47 in position that is visible from the outside.

In a preferred (but not exclusive) embodiment, the base body 12 comprises a protuberance 45, preferably projecting from the body in a transversal direction to the axis of the mouth 62 of the tank, where a recess 46 is afforded which communicates with the chamber 61 of the tank, for example through a thin channel 49, which opens inferiorly in the vertical channel 15 of the base body 12.

The pressure indicator means 40 comprise a hollow body 47 having a lower cavity that defines the sliding chamber 42. The hollow body 47 is stably associated to the recess 46, in particular its external side surface is screwed onto the internal lateral surface of the recess 46.

The obturator sealedly slides 41 within the chamber 42, separating the two ends 42a, 42b thereof; the lower end is in continuous communication, directly or indirectly, with the chamber 61 of the tank and the upper end 42b is in communication directly or indirectly with the external atmosphere. The seal provided by the obturator 41 - chamber 42 pair (which, preferably comprises a seal ring 58), seals the fluid present in the tank 60.

When the pressure in the chamber 61 of the tank overcomes the thrust action of the spring 43, the obturator 41 moves into the top end position, against the end 42b; it is preferable that in this configuration a frontal seal 59 located on the upper surface of the obturator 41 acts against the upper end 42b of the chamber 42.

When, instead, the spring action 43 overcomes the pressure present in the chamber 61 of the tank, the obturator 41 is brought into the lower end position, against the lower end 42a.

The hollow body 47 comprises a second axial chamber 48, located superiorly of the chamber 42, superiorly communicating with the external environment and inferiorly with the upper base of the chamber 42. The first signalling element 44 is located internally of the chamber 48 and flows along it.

The chamber 48 has a diameter that is larger than the external diameter of the signalling element 44, such as to realise a cylindrical cavity, defined between the internal lateral surface of the chamber 48 and the external lateral surface element 44 such as to house the reaction spring 43, which is cylindrical in shape. At the upper end thereof, the hollow body 47 exhibits a radial reduction 47a, through which the signalling element 44 snugly passes; the spring 43 is located adjacent to the external surface of the first signalling element 44 and is axially compressed between the reduction 47a and the obturator 41.

The axial length of the indicator element 44 is such that when the obturator 41 is in the upper end position (as shown in figure 3), at least the upper portion thereof projects externally outwardly from the hollow body 47 and becomes visible from the outside. When instead the obturator 41 is in the lower end position (as shown in figure 3A), the signalling element 44 is completely or almost completely retracted inside the hollow body 47, or in any case is in a distinct location with respect to the position in which it projects externally, by such a measure that the difference can be clearly seen by an observer.

To make the position of the signalling element 44 more easily perceptible to the human eye, a second signalling element 50 is comprised, which is associated to the first signalling element 44 in such a way that when the obturator 41 is in the upper end position, only the first signalling element 44 is visible to the observer from outside, while when the obturator 41 is in the lower end position, only the second signalling element 50 is visible.

The second signalling element 50 has an axial shape, in particular cylindrical, and is fixed to the hollow body 47 in the axial position, partially arranged inside the second axial chamber 48; more precisely, the upper portion of the second element 50 projects externally out of the upper end of the hollow body 47. The first signalling element 44 is cylindrical and tubular and slides, with its upper portion externally around the second element 50.

The sizes of the described elements are such that when the obturator 41 is in the upper end position, the first signalling element 44 completely covers the second element 50, in particular it covers the upper portion thereof, which is therefore no longer visible.

However, when the obturator 41 is in the lower end position, the first element 44 retracts inferiorly internally of the hollow body 47 and therefore only the second signalling element 50 is visible from the outside.

In particular, according to the embodiment illustrated in the figures, the second signalling element 50 is fixed to an upper cover 51, located on the upper body 47 by means of a radial pin 50'.

The first signalling element 44 is solidly fixed to an upper shank 41 a solidly constrained to the obturator 41 and axially projecting upwards inside the axial chamber 48.

The thrust provided by the reaction means (spring) 43 is such as to overcome the thrust provided on the obturator 41 only when the pressure inside the tank 50 is brought to levels below a minimum acceptable level (below which it is considered that the fire extinguisher is not able to function properly).

In use, the normal pressure inside the tank 60, or at least the sufficient pressure for the proper functioning of a fire extinguisher, is able to provide a greater thrust (and generally considerably greater) that the thrust provided by the spring 43. Under these conditions, the obturator 41 is pushed into the upper end position (figure 3) and the first signalling element 44 projects externally out of the upper end of the hollow body 47, hiding the detector 50 from an observer's sight. The observer therefore immediately understands that the pressure inside the tank is at a normal and therefore satisfactory level.

But when the pressure inside the tank 60 falls below that minimum acceptable level, the thrust provided thereby on the obturator is insufficient to overcome the spring action 43 and therefore the obturator 41 is pushed into the lower end position (figure 3A). In this configuration, the first signalling element retracts inside the hollow body 47, leaving the second signalling element uncovered. Thus the observer then immediately understands that the pressure inside the tank is at a lower level than is acceptable. Preferably, the external surfaces of the two signalling elements 44 and 50 are covered with optically different respective colours, in particular two opposite colours e.g. black and white, red and green, etc. so that the observer immediately perceives the state of the pressure inside the chamber 61. Obviously numerous modifications of a practical-applicational nature can be brought to the invention, without its forsaking the inventive idea as claimed in the following.

## Claims

1. An improved dispensing valve, for a fire extinguisher comprising a tank containing an extinguishing substance under pressure, comprising:
- an outlet (11) for dispensing the extinguishing substance to outside,
- a base body (12), sealedly applicable to the mouth (61) of the tank, having an internal conduit (13) which sets the chamber of the tank in communication with the outlet (11),
- intercept means (20) to control the dispensing of the fluid flowing in the internal conduit (13),
- manual command means (30), applied externally to the base body (12) for controlling the intercept means (20),
- a pressure signalling device 40 applied to the base body 12, comprising:
○ a hollow body (46)
○ a sliding obturator (41),
○ a sliding chamber (42) for the obturator (41), located inside the hollow body (47), having a first end (42a) in communication with the chamber (61) of the tank, the obturator (41) sealedly sliding internally of the sliding chamber (42),
○ reaction means (43) acting on the obturator (41) which oppose a thrust produced by the pressure of the chamber (61),
○ the obturator (41) being mobile between a first position in which it is located when the thrust of the reaction means (43) prevails, and a second position in which it is located when the pressure of the chamber (61) prevails,
○ a signalling element (44) mobile together with the obturator (41), projecting at least in part externally of the hollow body (47) in a position that is visible from outside.
**characterised in that** it comprises a second signalling element (50), associated to the first signalling element (44), which is fixed to the hollow body (47), having an axial shape and an upper portion projecting externally out of the upper end of the hollow body (47);
the first signalling element (44) having a tubular and sliding cylindrical portion, with the upper portion thereof placed externally about the second element (50);
the dimensions of the signalling elements being such that when the obturator (41) is in the upper end position, the first signalling element (44) completely covers the second element (50), which is therefore no longer visible, and
when the obturator (41) is in the lower end position, the second signalling element (50) is visible from outside.

2. The valve of claim 1, **characterised in that** the base body comprises a recess (46) communicating with the chamber (61) of the tank, and the hollow body (47) is associated stably to the recess (46).

3. The valve of claim 2, **characterised in that** the base body comprises a protuberance (45) projecting transversally with respect to the axis of the mouth (62) of the tank, in which the recess (46) communicating with the chamber of the tank is fashioned.

4. The valve of claim 1, **characterised in that** the second signalling element (50) has a cylindrical shape and is fixed to the hollow body (47) in an axial position partially arranged in the second axial chamber (48);
